# EUROPÄISCHE PATENTSCHRIFT

(11) **EP 3 311 651 B1**
(45) Veröffentlichungstag und Bekanntmachung des Hinweises auf die Patenterteilung: **07.04.2021**
(21) Anmeldenummer: 17001100.1
(22) Anmeldetag: 28.06.2017
(51) Int. Cl.: A01F 7/04, A01F 12/28, A01F 12/18

(54) **DRESCHWERK FÜR EINEN MÄHDRESCHER UND MÄHDRESCHER MIT DEM DRESCHWERK**
THRESHING UNIT FOR A COMBINE HARVESTER AND COMBINE HARVESTER WITH THE THRESHING UNIT
BATTEUR DE MOISSONNEUSE-BATTEUSE ET MOISSONNEUSE-BATTEUSE LE COMPRENANT

(30) Priorität: 28.09.2016 DE 102016118333
(43) Veröffentlichungstag der Anmeldung: 25.04.2018
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Speckamp, Dirk, 59073 Hamm (DE); Gehrmann, Stefan, 33397 Rietberg (DE); Bußmann, Jens, 49179 Ostercappeln (DE); Esken, Dirk, 59494 Soest-Meckingsen (DE); Waten, Björn, 59320 Westkirchen (DE); Terörde, Stefan, 48231 Warendorf (DE); Bühlmeier, Robert, 33442 Herzebrock-Clarholz (DE)
(74) Vertreter: CLAAS Gruppe

(56) Entgegenhaltungen:
- EP-A1- 1 820 390
- EP-A2- 0 823 201
- DE-A1-102007 006 926
- GB-A- 897 337

## Beschreibung

Die vorliegende Erfindung betrifft ein Dreschwerk für einen Mähdrescher, mit zumindest drei zur Bearbeitung des Erntegutes vorgesehenen Trommeln, die eine zum Dreschen der Erntegutes vorgesehene Dreschtrommel umfassen, sowie zumindest zwei der Dreschtrommel In eine Förderrichtung des Erntegutes durch das Dreschwerk nachfolgende Trommeln. Die vorliegende Erfindung betrifft weiterhin einen Mähdrescher mit einem solchen Dreschwerk sowie ein Verfahren zum Einstellen des Dreschwarks.

Mit Mehrtrommeldreschwerken, insbesondere nach dem Tangentlalflussprinzip, kann auch bei hohem Erntegut-Durchsatz noch ein optimales Druschergebnis erzielt werden. Maßgeblich dafür ist eine sehr gute Abstimmung der Trommeln, der mit den Trommeln zusammenwirkenden Dreschkörbe und der Drehzahlen der Trommeln aufeinander.

Dafür ist es bekannt, zumindest zwei Dreschtrommeln In Förderrichtung des Erntegutes hintereinander anzuordnen. Die erste Dresohtrommel übernimmt dabei die Aufgabe, auch bei ungleichmäßiger Menge zugeführten Ernteguts den Gutstrom zu verglelchmäßigen, so dass die der zweiten Dreschtrommel zugeführte Erntegutmenge nur In engen Grenzen variiert. Dadurch kann der Ausdrusch verbessert werden.

Es Ist aber weiterhin erforderlich, dass das Dreschwerk In Abhängigkeit von der Erntegutart, den Erntebedingungen und dem gewünschten Druschergebnis einstellbar ist. Dafür werden ein Abstand der die Dreschtrommeln zumindest teilweise umschlingenden Dreschkörbe und/oder eine Umfangsgeschwindigkeit der Dreschtrommeln verändert. Ein enger Abstand führt zu einem schärferen Druschprozeß, kann aber eine große Menge Körnerbruch bewirken und die Strohqualität verringern. Demgegenüber führt ein weiter Abstand zu verringertem Ausdrusch. Zudem führt eine große Differenz der Dreschtrommeldrehzahlen gegebenenfalls zu erhöhtem Körnerbruch.

Die Druckschrift DE 10 2013 100 057 A1 beschäftigt sich mit der Verstellung zweier Dreschkörbe, die zwei in Förderrichtung des Erntegutes hintereinander angeordnete Dreschtrommeln in ihrer Umfangsrichtung teilweise umschlingen. Die Dreschkörbe sind an Winkelhebein gelagert, die um ortsfeste Achsen schwenkbar sind. Die Winkelhebel sind mittels Verbindungsstangen miteinander und mit einem Hydraulikzylinder verbunden. Durch Verstellen des Hydraulikzylinders werden sie so verschoben, dass die Winkelhebel um ihre Achsen verschwenken. Dadurch werden die Dreschkörbe radial zu den Dreschtrommeln verstellt. Die Anordnung ermöglicht eine gleichmäßige Verstellung der Dreschkörbe, durch die der Abstand der Dreschtrommeln zu den Dresohkörben etwa gleichbleibend ist. Bekannt sind auch Dreschwerke mit einer Dreschtrommel, der das Erntegut unmittelbar vom Schrägförderer zugeführt wird, und einer die Abscheideleistung erhöhenden Abscheidetrommel, die der Dreschtrommel nachgeordnet ist, Um eine große Umschlingung der Dreschtrommel zu erreichen, wird der Dreschkorb in Förderrichtung hinter der Dreschtrommel zumeist sehr hoch geführt und das Erntegut über eine Wendetrommel, die das Erntegut von der Dreschtrommel abnimmt, in die Abscheidetrommel geleitet. Solche Dresohwerke zeigen beispielsweise die Druckschriften DE 42 18 611 C3 und DE 10 2007 031 807 A1.

Nachtellig an diesen Dreschwerken ist, dass das Erntegut stark umgelenkt werden muss. Denn dies kann die Strohqualität verschlechtern und zu erhöhtem Körnerbruch führen. Zudem muss das Erntegut bei jeder starken Umlenkung neu beschleunigt werden, was die für den Antrieb des Dreschwerks erforderliche Leistung, sowie den Energieverbrauch des Mähdreschers, erhöht.

Das Dokument GB 897,337 offenbart ein Dreschwerk nach dem Oberbegriff des Anspruchs 1.

Aufgabe der vorliegenden Erfindung ist es, ein Dreschwerk für einen insbesondere selbstfahrenden Mähdrescher zu schaffen, das auch bei einer großen Menge gegebenenfalls ungleichmäßig In das Dreschwerk zugeführtem Erntegut eine sehr hohe Abscheideleistung bei geringem Körnerbruch und guter Strohqualität ermöglicht, und das zudem eine möglichst kleine Antriebsleistung benötigt.

Die Aufgabe wird gelöst mit einem Dreschwerk mit den Merkmalen des unabhängigen Patentanspruchs 1, mit einem Mähdreschermit den Merkmalen das unabhängigen Patentanspruchs 10, sowie mit einem Verfahren mit den Merkmalen des unabhängigen Patentanspruchs 13. Vorteilhafte Ausführungsformen sind den abhängigen Ansprüchen entnehmbar.

Dafür wird ein Dreschwerk für einen Mähdrescher geschaffen. Das Dreschwerk weist zumindest drei zur Bearbeitung des Erntegutes vorgesehene Trommeln auf, die eine zum Dreschen des Erntegutes vorgesehene Dreschtrommel umfassen. Zudem sind die weiteren beiden Trommeln in eine Förderrichtung des Erntegutes durch das Dreschwerk betrachtet der Dreschtrommel nachgeordnet.

Das Dreschwerk zeichnet sich dadurch aus, dass
- die Trommeln jeweils einen Durchmesser aufweisen, wobei der Durchmesser der Dreschtrommel am größten ist,
- die Trommein auf einer In Förderrichtung etwa konkav verlaufenden, anstelgenden fiktiven Linie gelagert sind, und
- die Durchmesser der auf die Dreschtrommel nachfolgenden Trommeln In Förderrichtung sukzessive kleiner werden.

Durch die große Dreschtrommel ist ein ausreichend großer Dreschweg sichergestellt, der eine sehr hohe Abscheidung ermöglicht. Die große Dreschtrommel ermöglicht zudem einen sehr großen Erntegutdurchsatz. Die Lagerung der Trommeln auf der konkav verlaufenden, ansteigenden fiktiven Linie sowie die sukzessive kleiner werdenden Durchmesser der Trommeln ermöglichen trotz der großen Dreschtrommel einen Materialflussverlauf ohne starke Gutumlenkung, insbesondere beim Übergang von der Dreschtrommel zu der Ihr unmittelbar nachgeordneten Trommel. Der Erntegutstrom wird daher nicht immer wieder gestört sondern verläuft insgesamt sehr gleichmäßig, und das Erntegut muss nicht immer wieder neu beschleunigt werden. Trotz der großen Trommeln, Insbesondere der Dreschtrommel, ist die für den Antrieb des Dreschwerks erforderliche Antriebsieistung daher ausreichend klein.

Der Durchmesser der Dreschtrommel ist bevorzugt so groß wie möglich. Er ist vor allem durch die Höhe das Mähdreschers begrenzt. Vorzugsweise ist er etwa gleich oder größer als 500mm, besonders bevorzugt Ist er etwa gleich oder größer als 600mm, ganz besonders bevorzugt ist er etwa gleich oder größer als 700mm. Auch bei einer verhältnismäßig kleinen Umschlingung der Dreschtrommel durch den Dreschkorb kann so ein großer Dreschweg sichergestellt werden. Das Dreschwerk ermöglicht daher eine ausreichend hohe Abscheidung.

Um auch bei der großen Dreschtrommel eine gute Gutannahme des Erntegutes in das Dreschwerk zu gewährleisten, ist der Dreschtrommel bevorzugt eine zum Vordreschen und/oder zur Förderung des Erntagutes vorgesehene Zuführtrommel in Förderrichtung vorgelagert. In dieser Ausführungsform weist das Dreschwerk daher zumindest vier Trommeln auf. Die Zuführtrommel führt auch bei einer großen, Insbesondere ungleichmäßigen, Menge zugeführten Ernteguts zur Vergleichmäßigung des Gutstroms. Außerdem beschleunigt sie das Erntegut, so dass dieses das Dreschwerk mit erhöhter kinetischer Energie durchläuft. Aufgrund der verhältnismäßig geringen Gutumlenkung wirkt sich dies vorteilhaft auf die benötigte Antriebsleistung aus. Zudem ermöglicht die beschleunigte Zufuhr des Erntegutes in die Dreschtrommel, sowie eine gegebenenfalls mit der Zuführtrommel zusammen wirkende zusätzlichen Abscheidefläche, eine noch weiter erhöhte Abscheidung.

Ein Durchmesser der Zuführtrommel ist bevorzugt kleiner als der der Dreschtrommel. Vorzugsweise weist sie einen Durchmesser auf, der größer als oder etwa gleich 400mm ist, um den gleichmäßigen Erntegutfluss zu gewährleisten. Es Ist weiterhin bevorzugt, dass Ihre Umfangsgeschwindigkeit geringer als die der Dreschtrommel ist, um das Erntegut langsam zu beschleunigen.

Weiterhin bevorzugt ist die Zuführtrommel auf der fiktiven Linie gelagert. Dadurch kann das Erntegut Im Bereich des Übergangs der Zuführtrommel zur Dreschtrommel gezielt stärker umgelenkt werden. Dies verbessert den Ausdrusch. Besonders bevorzugt ist In diesem Bereich ein Dreschelement verstellbar, Insbesondere verdrehbar, angeordnet, mit dem der Grad der Umlenkung einstellbar ist. Das Dreschelement kann erntegutabhängig und/oder In Abhängigkeit von den Erntebedingungen, beispielsweise feuchtigkeitsabhängig, manuell oder automatisch verstellt werden.

Die der Dreschtrommel nachgeordneten Trommeln umfassen bevorzugt eine Abscheidetrommel. Die Abscheidetrommel ist zur weiteren Erhöhung der Abscheidung vorgesehen. Vorzugsweise weist die Abscheidetrommel Werkzeuge auf, die den Gutstrom durchkämmen, um ihn zu fördern, aufzulockern und insbesondere bereits gelöste Körner von diesem zu lösen. Die Abscheidetrommel ist der Dreschtrommel besonders bevorzugt in Förderrichtung unmittelbar nachgeordnet,

Es ist bevorzugt, dass der Durchmesser der Abscheidetrommel größer als 350mm, besonders bevorzugt größer als 500mm, ist. Aufgrund des im Vergleich zur Dreschtrommel kleineren Durchmessers der Abscheidetrommel sowie der konkav verlaufenden, in Förderrichtung ansteigenden fiktiven Linie, auf der die Trommeln gelagert sind, ist die Gutumienkung Im Übergangsbereich zwischen der Dreschtrommel und der Abscheidetrommel gering. Insgesamt kann dennooh eine große Abscheidetrommel, die eine große Abscheidefläche ermöglicht, verwendet werden.

Weiterhin ist es bevorzugt, dass die der Dreschtrommel nachfolgenden Trommeln eine Wendetrommel umfassen, die der Abscheidetrommel in Förderrichtung, insbesondere unmittelbar, nachgelagert Ist. Die Wendetrommel nimmt das Erntegut von der Abscheidetrommel entgegen. Sie ist zum Fördern und/oder Umlenken des Erntegutes vorgesehen. Auch dabei werden noch Körner oder Früchte abgeschieden. Vorzugsweise lenkt die Wendetrommel das Erntegut auf eine Nachbearbeitungseinrichtung für das Erntegut, Insbesondere auf einen Hordenschüttler. Aufgrund der großen Trommeldurchmesser ist es vorteilhaft, die Wendetrommel zum Führen des Erntegutes auf die Nachbearbeitungseinrichtung zu verwenden.

Der Durchmesser der Wendetrommel Ist bevorzugt größer als 250mm, besonders bevorzugt größer als 300mm. Erfindungsgemaß ist sie zudem kleiner als die Abscheidetrommel, um den Materialfluss nicht unnötig zu stören. Der kleine Durchmesser der Wendetrommel ist zum Führen des Erntegutes ausreichend. Zudem weist die Wendetrommel dadurch ein kleines Gewicht auf, was sich vorteilhaft auf die für das Dreschwerk erforderliche Antriebsleistung auswirkt.

Da zu starke Differenzen in den Umfangsgeschwindigkeiten Auslöser für Körnerbruch sind, sind die Durchmesser der Trommeln, insbesondere der Dreschtrommel und der beiden ihr nachgeordneten Abscheidetrommel sowie Wendetrommel, so aufeinander abgestimmt, dass der Körnerbruch möglichst gering ist.

Vorzugsweise ist vor allam die Abscheidetrommel nicht mehr als 40% kleiner als die Dreschtrommel, besonders bevorzugt nicht mehr als 30% kleiner.

In einer besonders bevorzugten Ausführungsform werden die Drehzahlen aller Trommeln des Dreschwerks synchron, das heißt in einem festen Verhältnis zueinander, eingestellt. Dadurch kann auch bei Verstellung der Drehzahl gewährleistet werden, dass der Körnerbruch gering Ist. Zudem Ist dies in Bezug auf den gleichmäßigen Erntegutstrom, die Höhe der Abscheidung und die Strohqualität vorteilhaft Außerdem wird die Drehzahl der Abscheidetrommel so automatisch angepasst. Eine manuelle Umstellung der Drehzahlen der Trommeln auf verschledene Erntegutarten, beispielsweise von Getreide auf Mais, entfällt. Die Bedienung des Dreschwerks ist für den Anwender daher sehr einfach und die Möglichkeit einer Fehlbedienung des Dreschwerks ist so gering.

In einer bevorzugten Ausführungsform, die die Aufgabe ebenfalls löst, umfasst das Dreschwerk einen Dreschkorb und einen Abschefdekorb.

Der Dreschkorb umgibt bevorzugt zumindest die Dreschtrommel, oder, sofern das Dreschwerk eine Zuführtrommel aufweist, die Zuführtrommel und die Dreschtrommel, in Ihren Umfangsrichtungen jeweils zumindest teilweise. Beim Dreschen wirken die Dreschtrommel, oder die Zuführtrommel und die Dreschtrommel, mit dem Dreschkorb zusammen. Um einen möglichst gleichen Abstand der Dreschtrommel, oder der Zuführtrommel und der Dreschtrommel, vom Dreschkorb zu gewährleisten, kann der Dreschkorb auch mehrtellig ausgeführt sein.

Zudem umfasst das Dreschwerk bevorzugt den Abscheidekorb, der die Abscheidetrommel zumindest teilweise in ihrer Umfangsrichtung umgibt. Beim Abscheiden wirken der Abscheidekorb und die Abscheidetrommel zusammen.

Der Dreschkorb und der Abscheidekorb sind bevorzugt so miteinander verbunden, dass sie gemeinsam verstellbar sind. Beim Verstellen verändern sich ein Abstand des Dreschkorbes von der Dreschtrommel, oder ein Abstand des Dreschkorbes von der Zuführtrommel und von der Dreschtrommel, sowie ein Abstand des Abscheidekorbes von der Abscheldetrommel, Auch diese Maßnahme vereinfacht die Bedienung des Dreschwerks für den Anwender.

Dafür ist es bevorzugt, dass das Dreschwerk eine Korbverstellung aufweist, die zum Verstellen des Dreschkorbs und des Abscheidekorbs vorgesehen ist, Zum gemeinsamen Verstellen das Dreschkorbs und des Abscheidekorbs weist die Korbverstellung bevorzugt einen ersten Versteilhebel, insbesondere einen Hydromotor oder einen elektromotorisch angetriebenen Versteilhebel, auf. Zusätzlich oder alternativ kann ein manuell bedienbarer Hebel vorgesehen sein.

Besonders bevorzugt werden eine Dreschkorbposition des Dreschkorbs, das heißt ein Abstand der Dreschtrommel vom Dreschkorb, und eine Abscheidekorbposition des Abscheidekorbes, das heißt ein Abstand der Abscheidetrommel vom Abscheidekorb, in Abhängigkeit von der Dreschkorbposition ungleich weit verstellt. Dabei Ist es weiterhin bevorzugt, dass beim Verstellen des Dreschkorbes und des Abscheidekorbes der Abscheidekorb bei einer engen Dreschkorbposition, d. h. einem geringen Abstand der Dreschtrommel vom Dreschkorb, weniger stark verstelit wird, als bei einer weiten Dreschkorbposition, d. h. einem großen Abstand der Dreschtrommel vom Dreschkorb. Die enge Dreschkorbposition ist beispielsweise für Getreide vorteilhaft, die weite Dreschkorbposition für Mais oder Bohnen. Auch die manuelle Umstellung der Dreschkorbposition und/oder der bscheidekorbposition In Abhängigkeit von der Erntegutart, beispielsweise die Umstellung von Getreide auf Mals, entfällt daher. Die Bedienung des Dreschwerks Ist für den Anwender somit noch weiter vereinfacht

Um dennoch ein starkes Dreschen bei gleichzeitig guter Strohqualität zu ermöglichen, ist es in einer weiteren Ausführungsform bevorzugt, dass die Abscheidekorbposition voreinsteilbar ist. Dafür ist bevorzugt ein Abstand des Abscheidekorbes von der Abscheidetrommel voreinstellbar. Besonders bevorzugt ist ein enger Abstand oder ein weiter Abstand des Abscheidekorbes von der Abscheidetrommel, unabhängig vom Abstand des Dreschkorbes von der Dreschtrommel, oder des Dreschkorbes von der Zuführtrommel und der Dreschtrommel, voreinstellbar. Es ist ebenfalls bevorzugt, dass der Abstand des Abscheidekorbes von der Abscheidetrommel kontinuierlich veränderbar Ist. Durch die Voreinstellung eines weiten Abstandes des Abscheidekorbes von der Abscheidetrommel Ist für Erntegut, das ein starkes Dreschen erfordert, beispielsweise für Hartweizen, dennoch eine gute Strohqualität erreichbar.

Die Korbverstellung ermöglicht daher in Abhängigkeit von dem gewünschten Dresohziel die Wahl zwischen einer besonders großen Abscheidung und einer besonders guten Strohqualität.

Um das Voreinstellen des Abscheidekorbes, insbesondere vom weiten In den engen Abstand oder vom engen In den weiten Abstand, insbesondere unabhängig vom Verstellen der Dreschkorbposition, zu bewirken, weist das Dreschwerk die Korbverstellung auf, die neben einer Dreschkorbverstellung zum Verstellen des Abstandes des Dreschkorbes von der Dreschtrommel, oder von der Zuführtrommel und der Dreschtrommel, eine Abscheidekorbverstellung aufweist, wobei die Abscheidekorbverstellung zum Verstellen des Abstandes des Abscheidekorbes von der Abscheldetrommel vorgesehen ist. Die Abscheldekorberstellung und die Dreschkorbverstellung sind bevorzugt mit einem Verbindungsbauteil miteinander verbunden, das mittels einer exzentrisch um die Drehachse drehbaren Welle verschiebbar Ist. Zum Drehen der Welle weist die Abscheidekorbverstellung bevorzugt einen zweiten Verstellhebel auf. Vorzugsweise ist der Versteilhebel in zwei Positionen verstellbar. Dafür wird die Welle um einen Drehwinkel in eine Drehrichtung gedreht, Insbesondere um etwa 180°. In dieser Ausführungsform ist der Abscheidekorb zumindest In eine enge Abscheidekorbposition, In der sein Abstand von der Abscheidetrommel klein Ist, und in eine weite Abscheidekorbposition, In der sein Abstand von der Abscheidetrommel größer als in der engen Abscheidekorbposition ist, verstellbar. Es Ist aber auch eine Ausführungsform bevorzugt, in der der Verstellhebel kontinuierlich verstellbar ist, so dass die Abscheidekorbposition kontinuierlich verstellbar ist.

Zum Verstellen des Abscheidekorbs, insbesondere zum Drehen der Welle, weist die Abscheidekorbverstellung bevorzugt einen hydromotorischen oder einen elektromotorischen Antrieb auf. Zusätzlich oder alternativ kann eine manuelle Verstellung vorgesehen sein.

Durch die Anordnung des Verbindungsbauteils wird der Abscheidekorb bei enger Dreschkorbposition beim Verstellen von der engen in die weite Abscheldekorbposition weit geöffnet. Je weiter der Dreschkorb bereits geöffnet ist, umso geringer wirkt sich das exzentrische Verstellen des Verbindungsbauteils auf die endgültige Abscheidekorbposition aus. Die Verstellbarkeit der Abscheldekorbposition ist, Insbesondere bei maximaler Dreschkorbposition, daher begrenzt.

Die Trommeln des Dresohwerks und seine Ausmaße sind so aufeinander abgestimmt, dass sie eine sehr gute Abscheidung sowie eine sehr gute Strohqualität bei geringem Kornbruch ermöglichen. Trotzdem ist die für den Antrieb des Dreschwerks erforderliche Antriebsleistung ausreichend klein.

Die Aufgabe wird weiterhin gelöst mit einem Mähdrescher mit einem solchen Dreschwerk. Der Mähdrescher Ist für einen hohen Erntegutdurchsatz ausgelegt. Er weist bevorzugt eine Nachabscheldeeinrichtung, vorzugsweise einen Hordenschüttler, auf, die dem Dreschwerk nachgeordnet ist. Im Hordenschüttler werden Nichtkornbestandteile wie Spreu und Stroh von den Körnern oder Früchten getrennt.

Zum Einstellen des Dreschwerks ist es bevorzugt, dass der Mähdrescher eine Steuereinheit umfasst, die dazu eingerichtet ist, die Drehzahlen der Trommeln und/oder die Abstände der Trommeln des Dreschwerks von den Körben des Dreschwerks jeweils gemeinsam einzustellen. Vorzugsweise werden die Drehzahlen der Trommeln dabei synchron, das heißt in einem festen Verhältnis zueinander, verstellt. Weiterhin bevorzugt Ist die Steuereinheit zum Voreinstellen der Abscheidekorbposition eingerichtet.

Dafür ist es besonders bevorzugt, dass der Mähdrescher eine Benutzerschnittstelle aufweist, die ein Einstellen der Drehzahl der Dreschtrommel, der Dreschkorbposition und/oder der Voreinstellung der Abscheidekorbposition ermöglicht. Die Steuereinheit ist dafür vorgesehen, die Drehzahlen der übrigen Trommeln und/oder die Korbpositionen in Abhängigkeit von der Drehzahl der Dreschtrommel, der Dreschkorbposition und/oder der Voreinstellung der Abscheldekorbposition automatisch einzustellen. Vorzugsweise ist ein solches Einstellen der Drehzahl der Dreschtrommel, der Dreschkorbposition und/oder der Voreinstellung der Abscheidekorbposition von der Fahrerkabine aus möglich.

Weiterhin bevorzugt weist die Benutzerschnittstelle eine Anzeigeeinheit auf, auf der die aktuelle Drehzahl der Dreschtrommel, die aktuelle Dreschkorbposition und/oder die aktuelle Voreinstellung der Abscheidekorbposition dargestellt wird. Besonders bevorzugt werden auf der Anzeigeeinheit zudem die aktuelle Abscheidung, der aktuelle Kornbruch und/oder die aktuelle Strohqualität angezeigt. Aufgrund dieser Rückmeldung kann der Bediener eine optimale Einstellung des Draschwerks während der Erntefahrt vornehmen.

Die Aufgabe wird weiterhin gelöst mit einem Verfahren zum Einstellen eines Dreschwerks eines Mähdreschers, bei dem
- zunächst ein Abstand, insbesondere entweder ein enger Abstand oder ein weiter Abstand, des Abscheidekorbes von der Abscheidetrommel voreingestellt wird, und
- bei dem dann, insbesondere in Abhängigkeit von der Erntegutart und/oder den Erntebedingungen, die Abstände des Dreschkorbes von der Dreschtrommel, oder von der Zuführtrommel und der Dreschtrommel, sowie der Abstand des Abscheidekorbes von der Abscheidetrommel, insbesondere in einem festen Verhältnis zueinander synchron, verstellt werden.

Bevorzugt sieht das Verfahren zudem, Insbesondere anschließend, vor, dass die Drehzahlen der Trommeln des Dreschwerks, insbesondere in Abhängigkeit von der Erntegutart und/oder den Erntebedingungen, in einem festen Verhältnis zueinander synchron verstellt werden. Dabei kann das Einstellen der Drehzahlen der Trommeln und/oder der Abstände der Trommeln von den Körben unabhängig voneinander oder in Abhängigkeit voneinander erfolgen.

Mit dem Verfahren kann das Dreschwerk, insbesondere erntegutabhängig und/oder in Abhängigkeit von den Erntebedingungen, automatisch optimal eingestellt werden. Der Bediener kann dadurch entlastet und Fehlbedienungen können vermieden werden.

Die Erfindung wird Im Folgenden anhand von Figuren erläutert. Die Figuren sind lediglich beispielhaft und schränken den allgemeinen Erfindungsgedanken nicht ein. Es zeigen:
- Fig. 1: einen Mähdrescher nach dem Stand der Technik;
- Fig. 2: in (a) ein erfindungsgemäßes Dreschwerk und eine dem Dreschwerk in einer Förderrichtung nachgeordnete Nachbearbeitungseinrichtung in einer perspektivischen Ansicht, und in (b) schematisch einen Ausschnitt aus (a) in einer Seitenansicht;
- Fig. 3: in (a) und (b) schematisch eine Voreinstellung einer Absoheidekorbposition; und
- Fig. 4: in (a) - (e) die Korbverstellung in verschiedenen Positionen.

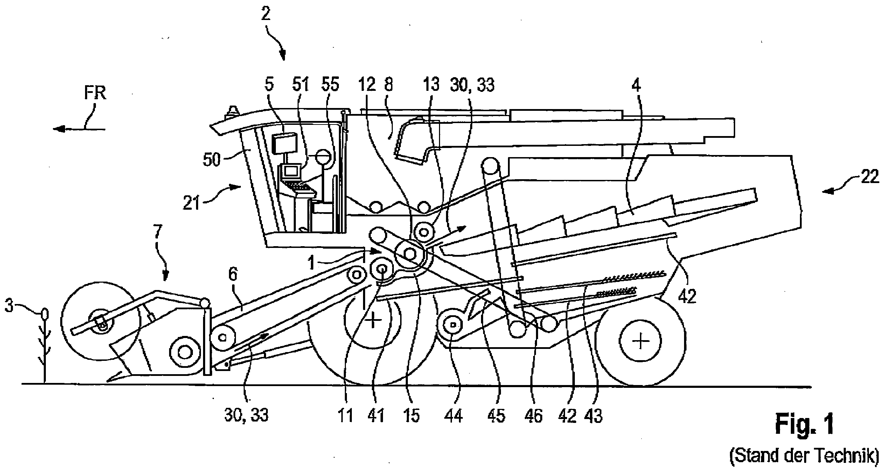

Figur 1 zeigt eine selbstfahrende landwirtschaftliche Erntemaschine 2, hier einen Mähdrescher. Die Begriffe Mähdrescher und selbstfahrende landwirtschaftliche Erntemaschine 2 werden Im Folgenden synonym verwendet Eine Fahrtrichtung des Mähdreschers 2 ist durch einen Pfeil FR gezeigt.

Der Mähdrescher 2 weist eine Frontseite 21 auf, an der eine Fahrerkabine 50 für einen Bediener 55 angeordnet ist. Zudem Ist an der Frontseite 21 ein Schneidwerk 7 angeordnet, welches Erntegut 3 aufnimmt. Das Schneidwerk 7 leitet das Erntegut 3 an einen Schrägförderer 6, über den es als Gutstrom 33 in eine Förderrichtung 30 an ein Dreschwerk 1 geleitet wird. Das hier dargestellte herkömmliche Dreschwerk 1 weist drei Trommeln 11 - 13 auf, nämlich eine Vordreschtrommel 11, die einer Dreschtrommel 12 vorgelagert ist, die Dreschtrommel 12 sowie eine der Dreschtrommel 12 nachgelagerte Umlenktrommel 13. Die Vordreschtrommel ist zum Vordreschen des Erntegutes 3 sowie zum Zuführen des Erntegutes 3 an die Dreschtrommel 12 vorgesehen, die Dreschtrommel 12 drischt das Erntegut 3, und die Umlenktrommel 13 übergibt das Erntegut 3 einer Nachbearbeitungseinrichtung 4, hier einem Hordenschüttler, der zum Reinigen des Erntegutes 3 vorgesehen ist. Die Begriffe Nachbearbeitungseinrichtung 4 und Hordenschüttler werden im Folgenden synonym verwendet.

Unterhalb des Dreschwerks 1 ist ein Dreschkorb 15 angeordnet, durch den bereits gelöstes Korn aus dem Erntegutstrom 33 abgeschieden wird.

Die im Dreschwerk 1 und der Nachbearbeitungseinrichtung 4 abgeschiedenen Körner werden über einen Rücklaufboden 42 und einen Zuführboden 41 einer mehrere Reinigungssiebe 43 und ein Gebläse 44 umfassenden Reinigungseinrichtung (nicht bezeichnet) zugeführt. Die gereinigten Körner werden anschließend über einen Kornelevator 46 in einen Korntank 8 geleitet. Größere Bestandteile des Gutstromes 33, die nicht durch die Reiniguhgsslebe 43 fallen können, werden dem Dreschwerk 1 über einen Überkehrelevator 45 erneut zugeführt. Stroh und Spreu (nicht bezeichnet) werden an der Heckseite 22 des Mähdreschers 2 auf dem Boden (nicht bezeichnet) abgelegt oder verteilt.

In einer Fahrerkabine 50 des Mähdreschers 2 Ist eine Bedienerschnittstelle 51 für einen Bediener 55 das Mähdreschers angeordnet, die zum Einstellen und zum Anzeigen von Parametern des Mähdreschers 2 und/oder des Erntegutes 3 und/oder der Erntebedingungen vorgesehen ist. Die Bedienerschnittstelle 51 Ist mit einer Steuereinheit 5 verbunden, die zum Steuern des Mähdreschers 2 vorgesehen ist. Anzeigbare und/oder einstellbare Parameter des Mähdreschers 2 sind beispielsweise eine Fahrgeschwindigkeit, der Kraftstoffverbrauch, sowie Betriebs- und/oder Einstellungsparameter eines Arbeitsaggregates des Mähdreschers 2, insbesondere des Dreschwerks 1.

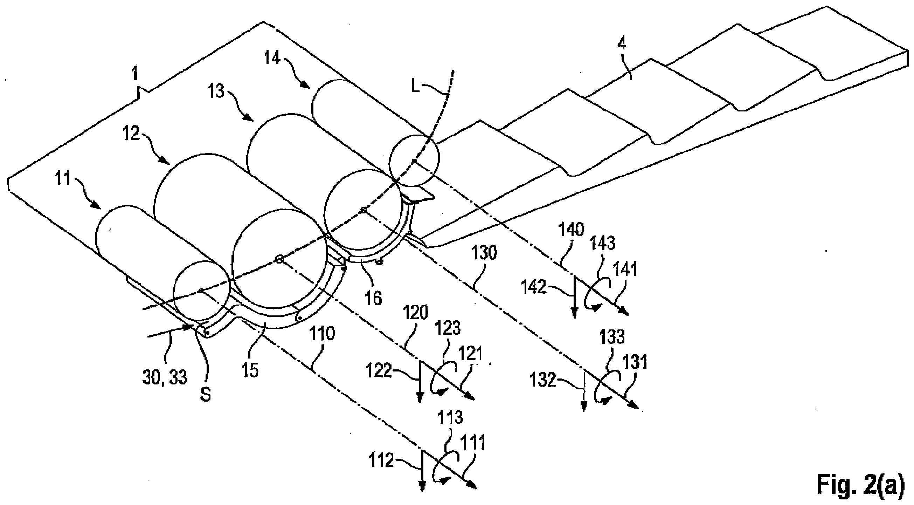

Fig. 2 (a) zeigt eine perspektivische Ansicht der Trommeln 11, 12, 13, 14 und Körbe 15, 16 des erfindungsgemäßen Dreschwerks 1 sowie den dem Dreschwerk 1 nachgeordneten Hordenschüttler 4.

Das Dreschwerk 1 umfasst Insgesamt vier Trommeln 11, 12, 13, 14. Die Trommeln 11, 12, 13, 14 erstrecken sich Jeweils konzentrisch um eine Achse 110, 120, 130, 140 In eine axiale Richtung 111, 121, 131, 141 und sind jeweils in eine Drehrichtung 113, 123, 133, 143 um die Achse 110, 120, 130, 140 drehbar. Die Achsen 110, 120, 130, 140 sind parallel zueinander angeordnet und voneinander beabstandet.

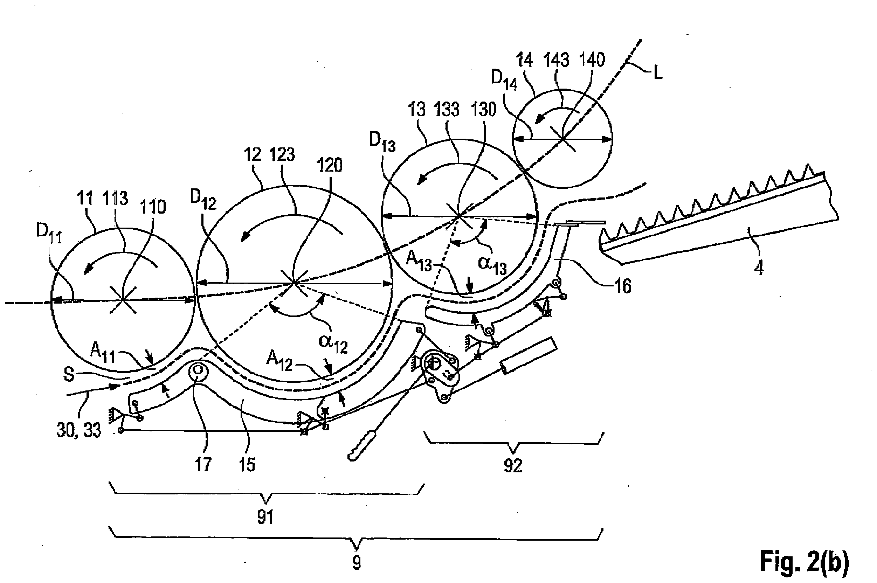

Die Trommel 11, 12, 13,14 mit dem größten Durchmesser D11, D12, D13, D14 (s. Fig. 2 (b)) ist die Dreschtrommel 12. Ihr sind zwei Trommeln 13, 14, nämlich eine Abscheidetrommel 13 und eine Wendetrommel 14, nachgeordnet, die sukzessive kleiner werden. Zudem ist ihr eine kleinere Zuführtrommel 11 vorgeordnet. Alle vier Trommeln 11, 12, 13, 14 sind auf einer in Förderrichtung 30 des Erntegutes 3 durch das Dreschwerk 1 ansteigenden konkaven Linie 1 angeordnet. Dies ermöglicht, insbesondere in Förderrichtung 30 hinter der Dreschtrommel 12, einen Materialflussverlauf ohne starke Gutumlenkung.

Unterhalb der Zuführtrommel 11 und der Dreschtrommel 12 ist ein Dreschkorb 15 angeordnet, durch den ausgedroschenes Korn oder Früchte vom Erntegut 3 abgeschieden werden können. Unterhalb der Abscheidetrommel 13 ist ein Abscheidekorb 16 angeordnet. Auch durch den Abscheidekorb 16 können ausgedroschenes Korn oder Früchte abgeschieden werden.

Der Dreschkorb 15 umschlingt die Zuführtrommel 11 und die Dreschtrommel 12 jeweils In Ihren Umfangsrichtungen 113, 123 zumindest teilweise. Der Abscheidekorb 16 umschlingt die Abecheidetrommel 13 in ihrer Umfangsrichtung 133 zumindest teilweise.

Das Erntegut 3 wird dem Dreschwerk 1 durch einen zwischen der Zuführtrommel 11 und dem Dreschkorb 15 angeordneten Spalt S zugeführt.

Fig. 2 (b) zeigt das Dreschwerk 1 sowie einen Ausschnitt des Hordenschüttiers 4 der Fig. 2 (a) schematisch in einer Seitenansicht. Dargestellt ist hier zudem eine Korbverstellung 9, die eine Dreschkorbverstellung 91 sowie eine Abscheidekorbverstellung 92 umfasst.

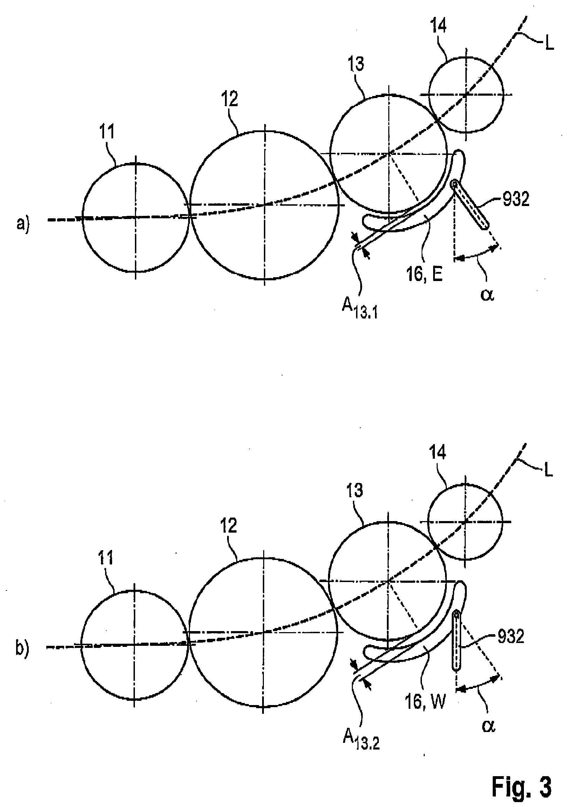

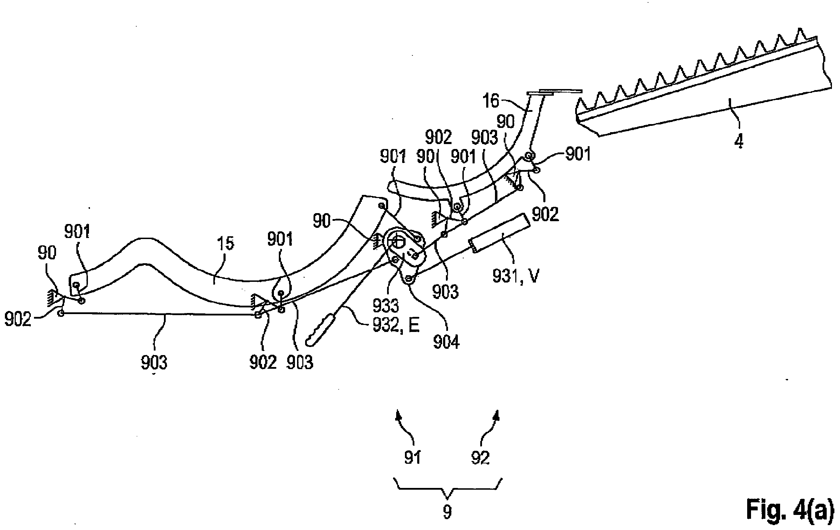

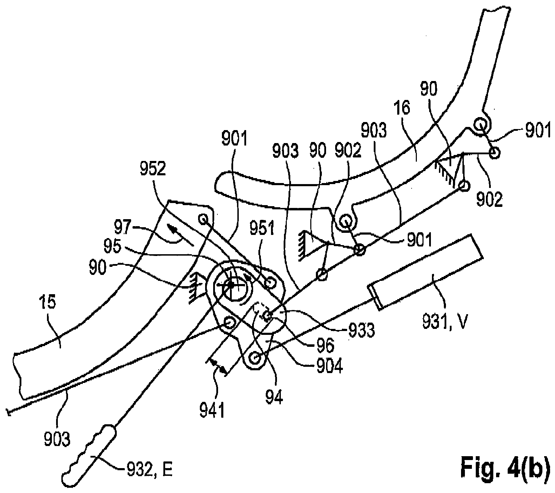

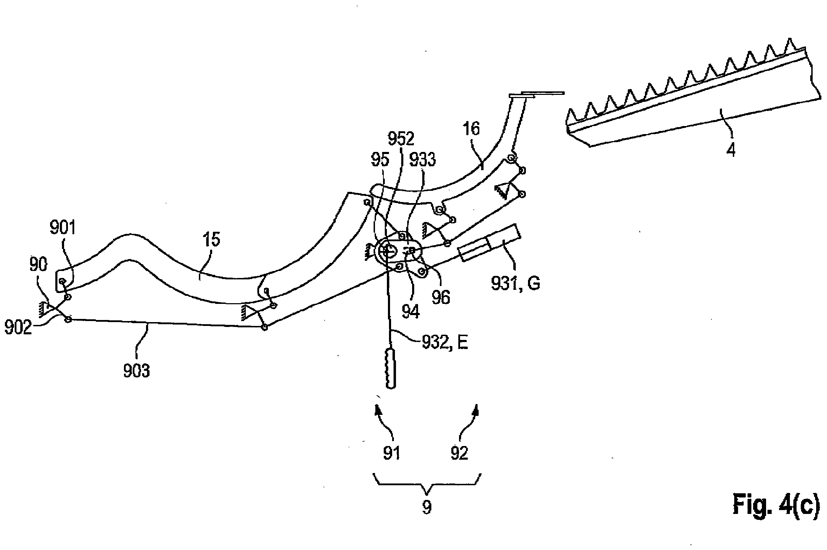

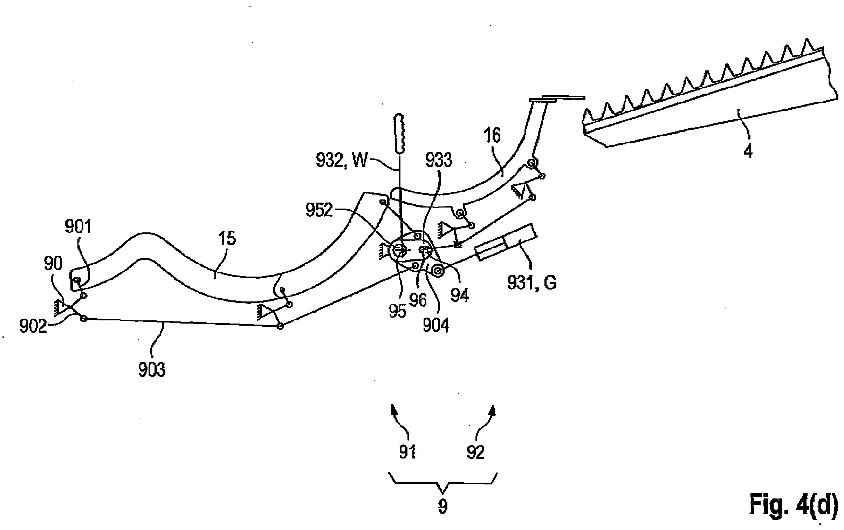

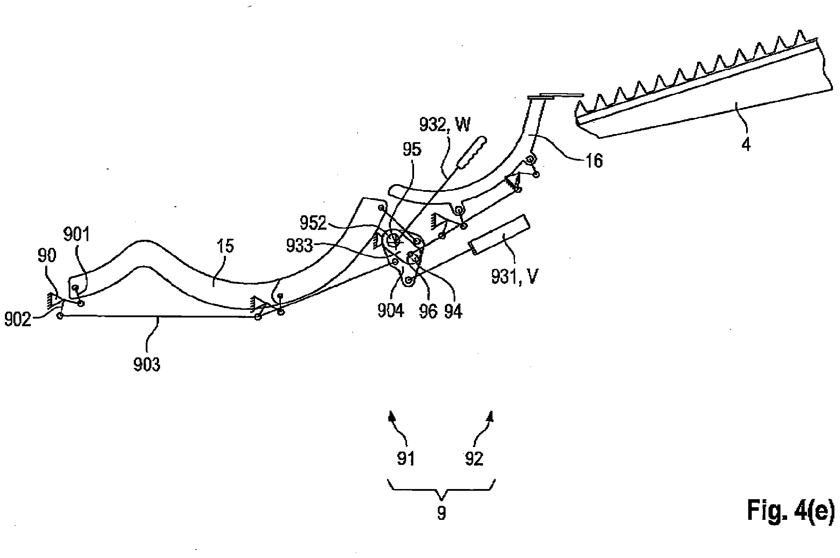

Der Dreschkorb 15 und der Abscheidekorb 16 sind mittels der Korbverstellung 9 jeweils In etwa radialer Richtung 112, 122, 132 (s. Fig. 2 (a)) zu der Trommel 11, 12, 13, die sie zumindest teilweise umschlingen, verstellbar. Dadurch ist eine Dreschkorbposition G, V (s. Fig. 4), das heißt ein Abstand A11, A12, der Zuführtrommel 11 und der Dreschtrommel 12 zum Dreschkorb 15, sowie eine Abscheidekorbposition E. W (s. Fig. 3, 4), das heißt ein Abstand A13.1, A13.2 (s. auch Fig. 3) der Abscheidetrommel 13 zum Abscheidekorb 16, verstellbar.

Das Dreschwerk 1 weist die vier auf der konkav verlaufenden, ansteigenden Linie L gelagerte Trommeln 11, 12, 13, 14 auf,

Eingangsseitig ist die Zuführtrommel 11 mit dem gegenüber der ihr nachgeordneten Dreschtrommel 12 kleineren Durchmesser D11. Der Dreschkorb 16 umschlingt zumindest einen Teil der Zuführtrommel 11. Durch den Spalt S zwischen der Zuführtrommel 11 und dem Dreschkorb 15 wird das Erntegut 3 dem Dreschwerk 1 eingangsseitig zugeführt. Durch ein Sieb (nicht bezeichnet) im Dreschkorb 15 kann bereits mit der Zuführtrommel 11 ausgedroschenes Korn vom übrigen Erntegut 3 abgeschieden werden.

Die Zuführtrommel 11 beschleunigt das Erntegut 3 und führt es der Dreschtrommel 12 zu. Die Dreschtrommel 12 weist den größten Durchmesser D12 der Trommeln 11, 12, 13, 14 des Dreschwerks 1 auf. Dadurch ist ein großer Dreschweg (nicht bezeichnet) erreichbar. Der Dreschweg ist durch einen ersten Umschlingungswinkel α12 bestimmt, um den der Dreschkorb 15 die Dreschtrommel 12 in Umfangsrichtung 123 umschlingt. Er beträgt bevorzugt etwa 100°-150°, besonders bevorzugt etw a 120°-140°. Die so erreichbare Dreschfläche liegt je nach Durchmesser D12 der Dreschtrommel 12 etwa zwischen 1m² - 1,7m².

Im Bereich der Dreschtrommel 12 werden die meisten Körner und Früchte vom Erntegut 3 gelöst. Durch ein Sieb (nicht bezeichnet) im Dreschkorb 15 werden sie vom Erntegutstrom 33 getrennt.

Um den Ausdrusch in Abhängigkeit vom Erntegut 3 zu verbessern, ist im Bereich des Übergangs der Zuführtrommel 11 zur Dreschtrommel 12 ein Dreschelement 17 verdrehbar angeordnet, mit dem ein Verlauf des Erntegutstroms 33 veränderbar ist. Das Dreschelement 17 kann, insbesondere erntegutabhängig und/oder in Abhängigkeit von den Erntebedingungen, aus einer ebenen Stellung (nicht bezeichnet) in eine erhabene Stellung (nicht gezeigt) verdreht werden. In der erhabenen Stellung wird das Erntegut 3 stärker umgelenkt. Dadurch wird es dort stärker ausgedroschen.

Der Dreschtrommel 12 Ist die Abscheidetrommel 13 nachgeordnet. Die Abscheidetrommel 13 ist zum Fördern und Auskämmen des Erntegutes 3 vorgesehen. Dadurch werden insbesondere bereits gelöste Körner und Früchte aus dem Erntegut 3 gelöst. Sie werden durch ein Sieb (nicht bezeichnet) Im Abscheidekorb 16 vom Erntegut 3 getrennt. Um eine gute Abscheidung im Bereich des Abscheidekorbes 16 zu erreichen, beträgt ein zweiter Umschlingungswinkel α13, der den Abscheideweg (nicht bezeichnet) bestimmt, und um den der Abscheidekorb 16 die Abscheidetrommel 13 umschlingt, bevorzugt etwa 90°- 125°, besonders bevorzugt etwa 100°-120°. Die so erreic hbare Abscheidefläche liegt je nach Durchmesser D13 der Abscheidetrommel 13 etwa zwischen 0,8m² - 1,2m².

Der Abscheidetrommel 13 ist in Förderrichtung 30 eine gegenüber dieser kleinere Wendetrommel 14 nachgeordnet. Die Wendetrommel 14 lenkt das Erntegut 3 zur Nachbearbeitungseinrichtung 4. Aufgrund Ihres kleinen Durchmessers D14 stört sie den Erntegutstrom 33 nicht unnötig.

Der Erntegutstrom 33 zwischen den Trommeln 11, 12, 13, 14 und den Körben 15, 16 ist durch einen gestricheiten Pfeil schematisch angedeutet. Sichtbar ist, dass er vor allem im Bereich des Übergangs (nicht bezeichnet) von der Dreschtrommel 12 zur Abscheidetrommel 13 nur geringfügig umgelenkt wird. Einmal beschleunigtes Erntegut 3 kann das Dreschwerk 1 daher durchlaufen, ohne nochmals erheblich neu beschleunigt werden zu müssen. Trotz des sehr großen Dreschtrommeldurohmessers D12 sowie der großen Abscheidetrommel 13 ist die für das Dreschwerk 1 benötigte Antriebsleistung daher ausreichend klein.

Um auch bei schnellem Erntegutstrom 33 und starkem Dreschen eine gute Strohqualität gewährleisten zu können, ist der Abscheidekorb 16 sowohl in eine enge Abscheidekorbposition E als auch in eine weite Abscheidekorbposition W voreinstellbar. Dies zeigt die Fig. 3 schematisch.

Dafür weist die Korbverstellung 9 die Abscheidekorbverstellung 92 auf.

Fig. 3 zeigt in (a) und (b) die Trommeln 11, 12, 13, 14 des Dreschwerks 1 der Fig. 2 sowie den Abscheidekorb 16. Dabei zeigt Fig. 3 (a) die Voreinstellung des Abscheidekorbes 16 in der engen Abscheidekorbposition E, in der der Abstand A13.1 der Abscheidetrommel 13 von dem Abscheidekorb 16 klein ist. Fig. 3 (b) zeigt die Voreinstellung des Abscheidekorbes 16 in der weiten Abscheidekorbposition W, in der der Abstand A13.2 der Abscheidetrommel 13 von dem Abscheidekorb 16 groß, Insbesondere größer als in der engen Abscheidekorbposition E, ist.

Der Abscheidekorb 16 wird mittels des zweiten Verstellhebels 932 verstellt Dafür wird der zweite Verstellhebel 932 um einen Drehwinkel α gedreht, der hier nur beispielhaft gezeigt Ist. Es Ist bevorzugt, dass der zweite Winkelhebel 932 um den Drehwinkel α von etwa 180° verdreht wird, um den Abscheidekorb 16 von der engen Abscheidekorbposition E in die weite Abscheidekorbposition W oder zurück zu verstellen. Der zweite Verstellhebel 932 kann manuell und/oder automatisch verstellbar sein.

Nach dem Voreinstellen des Abscheldekorbes 16 sind der Dreschkorb 15 und der Abscheidekorb 16 gemeinsam verstellbar. Dafür wird der erste Verstellhebel 931 (s. Fig. 4 (b) genutzt. Den gemeinsam mit dem Dreschkorb 15 verstellten Abscheidekorb 16 zeigen die Figuren 4.

Flg. 4 (a) und (b) zeigen die Korbverstellung 9 mit eng voreingestellter Abscheidekorbposition E In einer Verstallposition V des Dreschkorbs 15, in der dieser gegenüber einer Grundposition G verstellt ist, so dass der Abstand A12 der Dreschtrommel 12 vom Dreschkorb 15 größer als in der Grundposition G ist. Dabei Ist In Fig. 4 (b) ein vergrößerter Ausschnitt aus Fig. 4 (a) dargestellt.

Fig. 4 (c) zeigt die Korbverstellung 9 mit eng voreingestellter Abscheidekerbposition E in der Grundposition G, in der der Dreschkorb 15 unverstellt ist, so dass der Abstand A12 der Dreschtrommel 12 vom Dreschkorb 15 minimal ist.

Fig. 4 (d) zeigt die Korbverstellung 9 mit weit vorangestellter Abscheidekorbposition W In der Grundposition G des Dreschkorbs 15. Und Fig. 4 (e) zeigt die Korbverstellung 9 mit weit voreingestellter Abscheldekorbposition W In der Verstellposition V des Dreschkorbs 15.

Die Abscheldekorbverstellung 92 umfasst zumindest zwei Laschen 901, die voneinander beabstandet und drehbar am Abscheidekorb 16 befestigt sind. An den Laschen 901 Ist Jeweils ein Winkelhebel 902 drehbar befestigt. Die Winkelhebel 902 weisen jeweils zwei in einem Insbesondere rechten Winkel (nicht bezeichnet) zueinander angeordnete Schenkel (nicht bezeichnet) auf. Sie sind jeweils mittig um ein ortsfestes Lager 90 drehbar gelagert. Die jeweils der Lasche 901 gegenüber liegenden Enden (nicht bezeichnet) der Winkelhebel 902 sind mittels einer Verbindungsstrebe 903 miteinander verbunden.

Bei einem Verschieben der Verbindungsstrebe 903 werden die Winkelhebel 902 jeweils um ihr ortsfestes Lager 90 gedreht. Dabei ziehen die Winkelhebel 902 jeweils die Laschen 901 und mit ihnen den Abscheidekorb 16 In etwa die radiale Richtung 132 der die Abscheldetrommel 13 durchsetzenden Achse 130. Dadurch ändert sich der Abstand A13.1, A13.2 der Abscheidetrommel 13 zum Abscheidekorb 16.

Zum Verschieben der Verbindungsstrebe 903 Ist ein Verschiebebauteil 933 vorgesehen, das mit einem zweiten Versteilhebel 932 exzentrisch verstellbar, hier verschiebbar, ist.

Dafür weist das Verbindungsbauteil 933 eine Aufnahme (nicht bezeichnet) auf, die eine Welle 952 durchsetzt. Die Welle 952 ist exzentrisch um eine Drehachse 95 In eine Drehrichtung 951 drehbar. Im Folgenden werden die Begriffe Welle 952 und Exzenter synonym verwendet. Am Verbindungsbauteil 933 ist ein Stift 96 angeordnet, der mittels einer Verbindungsstrebe 903 mit einem Winkelhebel 902 der Abscheidekorbverstellung 92 verbunden Ist. Dar Stift 96 Ist in einer Kulisse 94 geführt, die in einem Verbindungswinkelhebel 904 angeordnet Ist, der auch zum Verstellen des Dreschkorbs 15 vorgesehen ist.

Durch Drehen des Exzenters 952 um die Drehachse 95 in die Drehrichtung 951 wird das Verbindungsbauteil 933 in eine Schieberichtung 97 verschoben. Dabei zieht die mit dem Winkelhebet 902 der Abscheldekorbverstellung 92 verbundene Verbindungsstrebe 903 wie oben beschrieben am Winkelhebel 902, so dass sich dieser um sein ortfestes Lager 90 dreht. Dadurch ändert sich der Abstand A13.1, A13.2 des Abscheldekorbes 16 von der Abscheidetrommel 13.

In der dargestellten Ausführungsform Ist zum Drehen des Exzenters 952 der zweite Verstellhebel 932 vorgesehen, mit dem der Exzenter 952 In eine enge Abscheldekorbpositionen E und eine weite Abscheldekorbposition W verstellbar ist. Dafür wird der Verstellhebel 932 um einen Drehwinkel a₁ hier um etwa 180°, in die Drehrichtung 951 verstellt. In der weiten Abscheidekorbposition W ist der Abstand A13.2 größer als In der engen Abscheldekorbposition A13.1.

Das Vorelnstellen der Abscheldekorbposition E, W Ist unabhängig von der Dreschkorbposition G, V möglich. Der Dreschkorb 15 und der Abscheldekorb 16 sind aber so miteinander verbunden, dass bei einem Verstellen der Dreschkorbposition G, V von einer Grundposition G, In der der Dreschkorb 15 unverstellt und der Abstand A12 der Dreschtrommel 12 vom Dreschkorb 15 minimal ist, in eine Verstellposition V, In der der Dreschkorb 15 verstellt und der Abstand A12 der Dreschtrommel 12 vom Dreschkorb 15 größer als in der Grundposition G ist, der Abscheidekorb 16 mit verstellt wird.

Zum Verstellen des Dreschkorbes 15 weist die Korbverstellung 9 die Dreschkorbverstellung 91 auf. Auch die Dreschkorbverstellung 91 umfasst zumindest zwei Laschen 901, die voneinander beabstandet und drehbar am Dreschkorb 15 befestigt sind. An den Laschen 901 Ist ebenfalls jeweils ein Winkelhebel 902, 904 drehbar befestigt. Die Winkelhebel 902, 904 sind jeweils mittig um ein ortsfestes Lager 90 drehbar gelagert. Die jeweils der Lasche 901 gegenüber liegenden Enden (nicht bezeichnet) der Winkelhebel 902, 904 sind mittels einer Verbindungsstrebe 903 miteinander verbunden.

Bei einem Verschieben der Verbindungsstrebe 903 werden die Winkelhebel 902, 904 jeweils um Ihr ortsfestes Lager 90 gedreht. Dabei ziehen die Winkelhebel 902, 904 Jeweils die Laschen 901 und mit ihnen den Dreschkorb 15 in etwa die radiale Richtung 122, 112 der die Dreschtrommel 12 oder die Zuführtrommel 11 durchsetzenden Achse 120, 110. Dadurch ändert sich der Abstand A12, A11 der Dreschtrommel 12 und der Zuführtrommel 11 zum Dreschkorb 15.

Der hier dargestellte Dreschkorb 15 ist zweitellig ausgebildet, um ein gleichmäßiges Verstellen des Abstandes A11 der Zuführtrommel 11 vom Dreschkorb 15 sowie des Abstandes A12 der Dreschtrommel 12 vom Dreschkorb 15 zu gewährleisten. Die Dreschkorbverstellung 91 ist Insoweit aus der Druckschrift DE 10 2013 100 057 A1 bekannt und wird daher nicht noch weiter beschrieben.

Die weite Abscheidekorbposition W ermöglicht auch bei in der Grundposition G befindlichem Dreschkorb 15 noch eine sehr gute Strohqualität.

### Bezugszeichenliste

- 1: Dreschwerk
- 11: Zuführtrommel
- 12: Dreschtrommel
- 13: Abscheidetrommel
- 14: Wendetrommel
- 15: Dreschkorb
- 16: Abscheidekorb
- 17: Hebel
- 2: Mähdrescher
- 21: Frontseite
- 22: Heckseite
- 3: Erntegut
- 30: Förderrichtung
- 33: Erntegutstrom
- 4: Nachbearbeitungseinrichtung
- 41: Zuführboden
- 42: Rücklaufboden
- 43: Reinigungssieb
- 44: Gebläse
- 45: Überkehrelevator
- 46: Kornelevator
- 5: Steuereinheit
- 50: Fahrerkabine
- 51: Bedienerschnittstelle
- 55: Bediener
- 6: Schrägförderer
- 7: Vorsatzgerät
- 8: Korntank
- 9: Korbverstellung
- 90: Ortsfestes Lager
- 901: Lasche
- 902: Winkelhebel
- 903: Verbindungsstrebe
- 904: Verbindungswinkelhebel
- 91: Dreschkorbverstellung
- 92: Abscheidekorbverstellung
- 931: Erster Verstellhebel
- 932: Zweiter Verstellhebel
- 933: Verbindungsbauteil
- 94: Kulisse
- 941: Verstellweg
- 95: Drehachse
- 951: Drehrichtung
- 952: Exzenter
- 96: Stift
- 97: Verschieberichtung
- L: Fiktive Linie
- D11 - D14: Durchmesser der Trommeln
- A11, A12, A13.1, A13.2: Abstand der Trommeln von den Körben
- FR: Fahrtrichtung
- S: Spalt zwischen Zuführtrommel und Dreschkorb
- G: Grundposition des Dreschkorbs
- V: Verstellposition des Dreschkorbs
- E: Enge Abscheidekorbposition
- W: Weite Abscheidekorbposition
- α: Drehwinkel
- α12: Umschlingungswinkel Dreschtrommel
- a13: Umschlingungswinkel Abscheidetrommel

## Patentansprüche

1. Dreschwerk (1) für einen Mähdrescher (2), mit zumindest drei zur Bearbeitung des Erntegutes (3) vorgesehenen Trommeln (12, 13, 14), die eine zum Dreschen der Erntegutes (3) vorgesehene Dreschtrommel (12) umfassen, sowie zumindest zwei der Dreschtrommel (12) in eine Förderrichtung (30) des Erntegutes (3) durch das Dreschwerk (1) nachfolgende Trommeln (13, 14),
die Trommeln (12, 13, 14) jeweils einen Durchmesser (D12, D13, D14) aufweisen, wobei der Durchmesser (D12) der Dreschtrommel (12) am größten ist,
**dadurch gekennzeichnet, dass**
• die Trommeln (12, 13, 14) auf einer in Förderrichtung (30) etwa konkav verlaufenden, ansteigenden fiktiven Linie (L) gelagert sind, und
• die Durchmesser (D13, D14) der auf die Dreschtrommel (12) nachfolgenden Trommeln (13, 14) in Förderrichtung (30) sukzessive kleiner werden.

2. Dreschwerk (1) nach Anspruch 1, **dadurch gekennzeichnet, dass** der Durchmesser (D12) der Dreschtrommel (12) größer als 500mm Ist, Insbesondere größer als 700mm.

3. Dreschwerk (1) nach einem der vorhergehenden Ansprüche, **dadurch gekennzeichnet, dass** der Dreschtrommel (12) zudem eine zum Vordreschen und/oder zur Förderung des Erntegutes (3) vorgesehene Zuführtrommel (11) in Förderrichtung (30) vorgelagert Ist, die auf der Linie (L) gelagert ist.

4. Dreschwerk (1) nach einem der vorhergehenden Ansprüche, **dadurch gekennzeichnet dass** die der Dreschtrommel (12) nachfolgenden Trommeln (13, 14) eine der Dreschtrommel (12) in Förderrichtung (30) nachgelagerte Abscheidetrommel (13) zum Abscheiden des Erntegutes (3) umfassen.

5. Dreschwerk (1) nach einem der vorhergehenden Ansprüche, **dadurch gekennzeichnet, dass** die der Dreschtrommel (12) nachfolgenden Trommeln (13, 14) eine der Abscheidetrommel (13) in Förderrichtung (30) nachgelagerte Wendetrommel (14) zum Fördern und/oder Umlenken des Erntegutes (3) umfassen.

6. Dreschwerk (1) nach einem der vorhergehenden Ansprüche, **dadurch gekennzeichnet, dass** eine Drehzahl aller Trommeln (11, 12, 13, 14) des Dreschwerks (1) synchron In einem festen Verhältnis zueinander eingestellt wird.

7. Dreschwerk (1), nach einem der vorhergehenden Ansprüche, **dadurch gekennzeichnet, dass** es einen Dreschkorb (15) umfasst, der zumindest die Dreschtrommel (12), oder die Zuführtrommel (11) und die Dreschtrommel (12), in ihren Umfangsrichtungen (113, 123) jeweils zumindest teilweise umschlingt, und dass es einen Abscheidekorb (16) umfasst, der die Abscheidetrommel (13) zumindest teilweise in ihrer Umfangsrichtung (133) umschlingt, wobei der Dreschkorb (15) und der Abscheidekorb (16) so miteinander verbunden sind, dass sie gemeinsam in einem festen Verhältnis zueinander verstellbar sind, wobei sich ein Abstand (A11, A12) des Dreschkorbes (15) von der Dreschtrommel (12), oder der Zuführtrommel (11) und der Dreschtrommel (12), sowie ein Abstand (A13.1, A13.2) des Abscheidekorbes (16) von der Abscheidetrommel (13) ändert.

8. Dreschwerk (1) nach Anspruch 7, **dadurch gekennzeichnet, dass** ein Abstand (A13.1, A13.2) des Abscheidekorbes (16) von der Abscheidetrommel (13), insbesondere ein enger Abstand (A13.1) oder ein weiter Abstand (A13.2) des Abscheidekorbes (16) von der Abscheidetrommel (13), unabhängig vom Abstand (A11, A12) des Dreschkorbes (15) von der Dreschtrommel (15), oder der Zuführtrommel (11) und der Dreschtrommel (12), voreinstellbar ist.

9. Dreschwerk (1) nach Anspruch 8, **dadurch gekennzeichnet, dass** das Dreschwerk (1) dafür eine Dreschkorbverstellung (91) zum Verstellen des Abstandes (A11, A12) des Dreschkorbes (15) von der Dreschtrommel (12), oder der Zuführtrommel (11) und der Dreschtrommel (12), umfasst, die mit einer Abscheidekorbverstellung (92) des Dreschwerks (1), die zum Verstellen des Abstandes (A13.1, A13.2) des Abscheidekorbes (16) von der Abscheidetrommel (13) vorgesehen ist, mit einem Verbindungsbauteil (933) verbunden ist, das mittels einer exzentrisch um eine Drehachse (95) drehbaren Welle (952) verschiebbar ist.

10. Mähdrescher (2) mit einem Dreschwerk (1) nach einem der vorherigen Ansprüche.

11. Mähdrescher (2) nach Anspruch 10, **dadurch gekennzeichnet, dass** dem Dreschwerk (1) eine Nachabscheideeinrichtung (4), insbesondere ein Schüttler, nachgeordnet ist.

12. Mähdrescher (2) nach einem der Ansprüche 10-11, **dadurch gekennzeichnet, dass** er eine Steuereinheit (5) umfasst, die zum Einstellen des Dreschwerks (1) vorgesehen ist, und die dazu eingerichtet Ist, die Drehzahlen der Trommeln (11 - 14) und/oder die Abstande (A11, A12, A13.1, A13.2) der Trommeln (11 - 14) von den Körben (15, 16) jeweils In einem festen Verhältnis zueinander synchron zu verstellen.

13. Verfahren zum Einstellen eines Dreschwerks (1) eines Mähdreschers (2), nach einem der Ansprüche 7-9, bei dem
• Ein Abstand (A13.1, A13.2). Insbesondere entweder ein enger Abstand (A13.1) oder ein weiter Abstand (A13.2), des Abscheidekorbes (16) von der Abscheidetrommel (13) voreingestellt wird, und bei dem dann
• die Abstände (A11, A12) des Dreschkorbes (15) von der Dreschtrommel (12), oder von der Zuführtrommel (11) und der Dreschtrommel (12), und der Abstand (A13.1, A13.2) des Abscheidekorbes (16) von der Abscheidetrommel (13), Insbesondere in einem festen Verhältnis zueinander synchron, verstellt werden.

14. Verfahren nach Anspruch 13, **dadurch gekennzeichnet, dass** die Drehzahlen der Trommeln (11 - 14) des Dreschwerks (1) In einem festen Verhältnis zueinander synchron verstellt werden.

## Claims

1. A threshing unit (1) for a combine harvester (2), having at least three drums (12, 13, 14) provided for processing harvested crop (3), the drums comprising a threshing drum (12) provided for threshing the harvested crop (3), as well as at least two drums (13, 14) downstream of the threshing drum (12) in a direction (30) for feeding the harvested crop (3) through the threshing unit (1),
the drums (12, 13, 14) having a respective diameter (D12, D13, D14) wherein the diameter (D12) of the threshing drum (12) is the greatest,
**characterized in that**
• the drums (12, 13, 14) are mounted on a notional line (L) which is approximately concave and is upwardly inclined in the feed direction (30), and
• the diameter (D13, D14) of the drums (13, 14) downstream of the threshing drum (12) in the feed direction (30) successively decreases.

2. The threshing unit (1) according to claim 1, **characterized in that** the diameter (D12) of the threshing drum (12) is greater than 500 mm, in particular greater than 700 mm.

3. The threshing unit (1) according to one of the preceding claims, **characterized in that** in addition, an infeed drum (11) is mounted upstream of the threshing drum (12) in the feed direction (30) for pre-threshing and/or for feeding the harvested crop (3) and which is mounted on the line (L).

4. The threshing unit (1) according to one of the preceding claims, **characterized in that** the drums (13, 14) downstream of the threshing drum (12) comprise a separating drum (13) for separating the harvested crop (3) mounted downstream of the threshing drum (12) in the feed direction (30).

5. The threshing unit (1) according to one of the preceding claims, **characterized in that** the drums (13, 14) downstream of the threshing drum (12) comprise an impeller drum (14) mounted downstream of the separating drum (13) in the feed direction (30) for feeding and/or deflecting the harvested crop (3).

6. The threshing unit (1) according to one of the preceding claims, **characterized in that** a speed of all of the drums (11, 12, 13, 14) of the threshing unit (1) is set synchronously to each other in a fixed ratio.

7. The threshing unit (1) according to one of the preceding claims, **characterized in that** it comprises a threshing concave (15) which is wrapped around at least a respective portion of at least the threshing drum (12), or the infeed drum (11) and the threshing drum (12), in their circumferential directions (113, 123), and **in that** it comprises a separating concave (16) which is wrapped around at least a portion of the separating drum (13) in its circumferential direction (133), wherein the threshing concave (15) and the separating concave (16) are linked together in a manner such that they can be adjusted together in a fixed ratio with respect to each other, wherein a distance (A11), A12) of the threshing concave (15) from the threshing drum (12), or from the infeed drum (11) and from the threshing drum (12), as well as a distance (A13.1, A13.2) of the separating concave (16) from the separating drum (13) is varied.

8. The threshing unit (1) according to claim 7, **characterized in that** a distance (A13.1, A13.2) of the separating concave (16) from the separating drum (13), in particular a narrow distance (A13.1) or a wide distance (A13.2) of the separating concave (16) from the separating drum (13) can be pre-adjusted independently of the distance (A11, A12) of the threshing concave (15) from the threshing drum (12) or from the infeed drum (11) and the threshing drum (12).

9. The threshing unit (1) according to claim 8, **characterized in that** for this purpose, the threshing unit (1) comprises a threshing concave adjustment mechanism (91) for adjusting the distance (A11, A12) of the threshing concave (15) from the threshing drum (12) or from the infeed drum (11) and the threshing drum (12), which is provided with a separating concave adjustment mechanism (92) for the threshing unit (1) which is provided for adjusting the distance (A13.1, A13.2) of the separating concave (16) from the separating drum (13) and which is connected to a linking component (933), which is displaceable by means of a shaft (952) which can be rotated eccentrically about a rotary axis (95).

10. A combine harvester (2) with a threshing unit (1) according to one of the preceding claims.

11. The combine harvester (2) according to claim 10, **characterized in that** a post-separation device (4), in particular a straw walker, is disposed downstream of the threshing unit (1).

12. The combine harvester (2) according to claim 10 or claim 11, **characterized in that** it comprises a control unit (5) which is provided to adjust the threshing unit (1) and which is configured to adjust the speeds of the drums (11 - 14) and/or the distances (A11, A12, A13.1, A13.2) of the drums (11 - 14) from the concaves (15, 16) respectively in a fixed relationship and synchronously with respect to each other.

13. A method for adjusting a threshing unit (1) of a combine harvester (2) according to one of claims 7 to 9, in which:
• a distance (A13,1 A13.2), in particular either a narrow distance (A13.1) or a wide distance (A13.2) of the separating concave (16) from the separating drum (13) is pre-adjusted, and in which then
• the distances (A11, A12) of the threshing concave (15) from the threshing drum (12), or from the infeed drum (11) and the threshing drum (12), and the distance (A13.1, A13.2) of the separating concave (16) from the separating drum (13) are adjusted, in particular in a fixed ratio and synchronously with respect to each other.

14. The method according to claim 13, **characterized in that** the speeds of the drums (11 - 14) of the threshing unit (1) are adjusted in a fixed ratio and synchronously with respect to each other.

## Revendications

1. Système de battage (1) pour une moissonneuse-batteuse (2), comprenant au moins trois tambours (12, 13, 14), qui sont prévus pour travailler le produit récolté (3) et qui incluent un batteur (12) prévu pour battre le produit récolté (3), ainsi qu'au moins deux tambours (13, 14) qui succèdent au batteur (12) dans une direction de convoyage (30) du produit récolté (3) à travers le système de battage (1), les tambours (12, 13, 14) présentant respectivement un diamètre (D12, D13, D14), le diamètre (D12) du batteur (12) étant le plus grand, **caractérisé en ce que**
• les tambours (12, 13, 14) sont montés sur une ligne fictive (L) s'étendant de manière sensiblement concave dans la direction de convoyage (30) et ascendante, et
• les diamètres (D13, D14) des tambours (13, 14) succédant au batteur (12) diminuent progressivement dans la direction de convoyage (30) .

2. Système de battage (1) selon la revendication 1, **caractérisé en ce que** le diamètre (D12) du batteur (12) est supérieur à 500 mm, en particulier supérieur à 700 mm.

3. Système de battage (1) selon une des revendications précédentes, **caractérisé en ce que** le batteur (12) est en outré précédé, dans la direction de convoyage (30), par un tambour d'amenée (11) qui est prévu pour pré-battre et/ou pour convoyer le produit récolté (3) et qui est disposé sur la ligne (L).

4. Système de battage (1) selon une des revendications précédentes, **caractérisé en ce que** les tambours (13, 14) succédant au batteur (12) incluent un tambour de séparation (13) succédant au batteur (12) dans la direction de convoyage (30) pour séparer le produit récolté (3).

5. Système de battage (1) selon une des revendications précédentes, **caractérisé en ce que** les tambours (13, 14) succédant au batteur (12) incluent un tire-paille (14) succédant au tambour de séparation (13) dans la direction de convoyage (30) pour convoyer et/ou dévier le produit récolté (3).

6. Système de battage (1) selon une des revendications précédentes, **caractérisé en ce qu'**une vitesse de rotation de tous les tambours (11, 12, 13, 14) du système de battage (1) est réglée de façon synchrone dans un rapport fixe entre eux.

7. Système de battage (1) selon une des revendications précédentes, **caractérisé en ce qu'**il comporte un contre-batteur (15) qui entoure respectivement au moins en partie le batteur (12), ou le tambour d'amenée (11) et le batteur (12), dans leurs directions circonférentielles (113, 123), et **en ce qu'**il comporte une corbeille de séparation (16) qui entoure le tambour de séparation (13) au moins en partie dans sa direction circonférentielle (133), le contre-batteur (15) et la corbeille de séparation (16) étant reliés l'un à l'autre de façon qu'il puissent être réglables conjointement dans un rapport fixe, un écartement (A11, A12) du contre-batteur (15) par rapport au batteur (12), ou par rapport au tambour d'amenée (11) et au batteur (12), ainsi qu'un écartement (A13.1, A13.2) de la corbeille de séparation (16) par rapport au tambour de séparation (13) étant modifiés.

8. Système de battage (1) selon la revendication 7, **caractérisé en ce qu'**un écartement (A13.1, A13.2) de la corbeille de séparation (16) par rapport au tambour de séparation (13), en particulier un écartement plus étroit (A13.1) ou un écartement plus large (A13.2) de la corbeille de séparation (16) par rapport au tambour de séparation (13), est préréglable indépendamment de l'écartement (A11, A12) du contre-batteur (15) par rapport au batteur (15), ou par rapport au tambour d'amenée (11) et au batteur (12).

9. Système de battage (1) selon la revendication 8, **caractérisé en ce que** le système de battage (1) inclut à cet effet un moyen de réglage de contre-batteur (91) pour régler l'écartement (A11, A12) du contre-batteur (15) par rapport au batteur (12), ou par rapport au tambour d'amenée (11) et au batteur (12), lequel est relié à un moyen de réglage de corbeille de séparation (92) du système de battage (1), lequel est prévu pour régler l'écartement (A13.1, A13.2) de la corbeille de séparation (16) par rapport au tambour de séparation (13), par un élément de liaison (933) qui est déplaçable au moyen d'un arbre (952) tournant de manière excentrique autour d'un axe de rotation (95).

10. Moissonneuse-batteuse (2) comprenant un système de battage (1) selon une des revendications précédentes.

11. Moissonneuse-batteuse (2) selon la revendication 10, **caractérisée en ce qu'**au système de battage (1) succède un équipement de post-séparation (4), en particulier un secoueur.

12. Moissonneuse-batteuse (2) selon une des revendications 10-11, **caractérisée en ce qu'**il inclut une unité de commande (5) qui est prévue pour régler le système de battage (1) et qui est agencée pour régler de manière synchrone les vitesses de rotation des tambours (11-14) et/ou les écartements (A11, A12, A13.1, A13.2) des tambours (11-14) par rapport aux corbeilles (15, 16) respectivement dans un rapport fixe les uns par rapport aux autres.

13. Procédé de réglage d'un système de battage (1) d'une moissonneuse-batteuse (2) selon une des revendications 7-9, dans lequel
• un écartement (A13.1, A13.2), en particulier soit un écartement étroit (A13.1), soit un écartement large (A13.2), de la corbeille de séparation (16) par rapport au tambour ramasseur (13) est préréglé, et dans lequel ensuite
• les écartements (A11, A12) du contre-batteur (15) par rapport au batteur (12), ou par rapport au tambour d'amenée (11) et au batteur (12), et l'écartement (A13.1, A13.2) de la corbeille de séparation (16) par rapport au tambour de séparation (13), sont réglés de manière synchrone, en particulier dans un rapport fixe.

14. Procédé selon la revendication 13, **caractérisé en ce que** les vitesses de rotation des tambours (11-14) du système de battage (1) sont réglées de manière synchrone dans un rapport fixe les unes par rapport aux autres.
